Europäisches Patentamt

European Patent Office

Office européen des brevets

(19)

(11) Numéro de publication: **0 163 571**

**A1**

(12) # DEMANDE DE BREVET EUROPEEN

(21) Numéro de dépôt: 85400933.9

(22) Date de dépôt: 13.05.85

(51) Int. Cl.⁴: **B 29 C 47/06**
B 29 C 67/22, B 29 D 23/00
//B29K105:04, (B29L23/22, 9:00)

(30) Priorité: 18.05.84 FR 8407709

(43) Date de publication de la demande:
04.12.85 Bulletin 85/49

(84) Etats contractants désignés:
BE CH DE FR GB IT LI NL

(71) Demandeur: SOTRA Industries
Rue de l'Amandier
F-78540 Vernouillet(FR)

(72) Inventeur: Bouly, Marceau
1, Avenue du Square
F-62141 Marconne(FR)

(74) Mandataire: Mongrédien, André et al,
c/o BREVATOME 25, rue de Ponthieu
F-75008 Paris(FR)

(54) **Procédé de fabrication par extrusions multiples de tubes allégés, rigides, en matiéres thermoplastiques.**

(57) Procédé de fabrication par extrusions multiples de tubes allégés, rigides, en matières thermoplastiques.

Ce procédé se caractérise en ce que:

a) on prépare par extrusion, dans une première extrudeuse (1), une ébauche (5) du tube à partir d'un mélange de matière thermoplastique et d'agent d'expansion,

b) on laisse expanser dans toutes les directions l'ébauche ainsi obtenue,

c) on extrude ensuite directement sur l'ébauche du tube en matière thermoplastique expansée, chauffée et conformée, au moins une couche (8) compacte, rigide de matière thermoplastique formant couche de recouvrement, et

d) on conforme l'ébauche composite ainsi obtenue dans un calibreur froid classique (13).

Les tubes obtenus peuvent être utilisés comme tubes d'adduction d'eau.

Procédé de fabrication par extrusions multiples de tubes allégés, rigides,en matières thermoplastiques.

La présente invention concerne un procédé de fabrication par extrusions multiples de tubes allégés, rigides, et à paroi composite en matières thermoplastiques ainsi que le tube obtenu.

Les tubes plastiques compacts sont couramment utilisés depuis ces vingt dernières années pour la confection des canalisations enterrées en raison de leur facilité de pose et de leurs qualités physiques et chimiques particulières. Ils pâtissent malheureusement de deux inconvénients majeurs : leur manque de rigidité qui se traduit par une faiblesse à l'écrasement, ainsi que leur prix,compte tenu des hausses substantielles du coût des résines. Des solutions ont donc été apportées pour résoudre ce double problème et se sont traduites par des techniques variées d'allègement et de rigidification de la paroi des tubes.

C'est ainsi par exemple que l'on a doté la paroi compacte de tubes en PVC rigide de cavités circulaires longitudinales ou que l'on a créé par extrusion, ou par enroulement hélicoïdal d'un profilé extrudé, des tubes à parois multiples, ou encore que l'on a utilisé les propriétés particulières des plastiques rigides allégés par expansion. Cette dernière technique largement répandue a permis la mise au point de produits rigides en matière expansée utilisables dans le bâtiment et les travaux publics. Malgré l'intérêt certain de ces produits, différentes tentatives ont été effectuées pour les améliorer et qui consistent à rigidifier la matière expansée en réalisant les tubes plastiques sous la forme de tubes composites comportant des couches externe et interne en matière thermoplastique massive et une couche intermédiaire en matériau thermoplastique expansé, comme cela est décrit dans le brevet français FR-A- 2 391 058 et dans le brevet américain US-A- 4 322 260. De tels tubes peuvent être fabriqués par coextrusion des différentes couches comme cela est décrit dans le brevet français FR-A- 2 391 058. Cependant, cette technique nécessite l'emploi d'une seule tête de coextrusion chauffée et régulée qui reçoit simultanément d'une première extrudeuse la matière thermoplastique compacte et d'une deuxième extrudeuse la matière thermoplastique contenant un agent d'expansion, et des canaux différents pour conduire l'ensemble jusqu'à la matrice de formation. Cette tête de coextrusion est donc complexe à réaliser et/ou à mettre en oeuvre, ce qui constitue un inconvénient.

On a aussi envisagé de réaliser de tels tubes par extrusions multiples en réalisant tout d'abord le tube interne, que l'on revêt ensuite par extrusion de la couche de matière thermoplastique expansée qui est elle-même revêtue par extrusion de la couche externe en matière thermoplastique compacte, comme cela est décrit dans le brevet américain US-A- 4 322 260.

Cependant, cette technique présente aussi certains inconvénients, en particulier celui de conduire à des tensions internes dans le matériau car la couche de matière thermoplastique expansée est extrudée sur un tube rigide et les contraintes ne peuvent être libérées au moment de l'expansion, ce qui provoque l'apparition de tensions internes conduisant à une fragilisation du matériau.

La présente invention a précisément pour objet un procédé de fabrication par extrusions multiples de tubes plastiques, allégés, rigides et à paroi composite, qui pallie les inconvénients des procédés décrits ci-dessus.

Le procédé selon l'invention de fabrication par extrusions multiples d'un tube plastique, allégé, rigide, à paroi composite, se caractérise en ce que :

a) on prépare par extrusion, dans une première extrudeuse, une ébauche du tube à partir d'un mélange de matière thermoplastique et d'agent d'expansion,

b) on laisse expanser dans toutes les directions l'ébauche ainsi obtenue,

c) on extrude ensuite directement sur l'ébauche du tube en matière thermoplastique expansée, chauffée et conformée, au moins une couche compacte rigide de matière thermoplastique formant couche de recouvrement, et

d) on conforme l'ébauche composite ainsi obtenue dans un calibreur froid classique.

Le procédé de l'invention permet ainsi de simplifier la fabrication des tubes à paroi composite en réalisant l'extrusion en deux temps de l'âme expansée et de la surface externe en matériau compact . Grâce à cet agencement, il est désormais possible d'utiliser des outillages classiques (tête-filière-poinçon), de faire varier à volonté l'épaisseur de la couche externe, de supprimer les phénomènes de retrait inhérents aux modes de fabrication de l'art antérieur, phénomènes qui sont dus aux contraintes engendrées dans l'âme expansée ou dans les deux couches compactes, lors de l'expansion de l'âme cellulaire.

En effet, en réalisant, tout d'abord, l'âme cellulaire en matière thermoplastique expansée, on peut réaliser l'expansion dans de bonnes conditions et obtenir en particulier une expansion radiale, ce qui n'était pas le cas dans les procédés de l'art antérieur où l'on réalisait l'expansion entre deux couches de matière compacte dans le brevet français FR-A- 2 391 058 ou sur une couche compacte dans le brevet américain US-A- 4 322 260. Le taux d'expansion est généralement de 5 à 50 %,par exemple d'environ 25 %.

Le tube plastique de l'invention qui comporte uniquement une âme en matière thermoplastique expansée

B. 8763    MDT

4

et une couche externe de recouvrement en matière compacte est ainsi plus facile à réaliser que les tubes de l'art antérieur comportant une âme en matière thermoplastique expansée prise en sandwich entre deux couches compactes.

Selon l'invention, on peut aussi, si on le désire, obtenir une pellicule lisse et dense sur la surface interne du tube en soumettant la surface interne de l'ébauche du tube, lors de l'étape d'expansion b), à l'action d'un fluide gazeux froid. Le fluide utilisé peut être de l'air, un gaz inerte ou plus généralement un gaz ne réagissant pas avec la matière thermoplastique utilisée.

Ceci permet d'obtenir des tubes plastiques ayant une surface interne lisse, ce qui est généralement recherché lorsque ces tubes sont destinés à être utilisés pour l'assainissement.

Selon un mode préféré de mise en oeuvre du procédé de l'invention, après l'étape b) d'expansion de l'ébauche, on conforme sous vide cette ébauche en matière expansée rigide dans un calibreur chaud, avant de réaliser l'étape c) d'extrusion de la couche compacte rigide de matière thermoplastique.

Ceci permet d'obtenir une meilleure adhérence par soudage en continu de la couche de recouvrement provenant de la deuxième extrudeuse.

De préférence, notamment lorsque l'ébauche n'est pas conforméesous vide dans un calibreur chaud, on maintient une légère pression de gaz à l'intérieur de l'ébauche sortant de la première extrudeuse. Les gaz utilisés peuvent être comme précédemment de l'air ou des gaz inertes. Ceci permet de conformer sous pression la matière expansée au niveau de la deuxième extrudeuse, l'ajustement du positionnement de l'expansion maximale pouvant être effectué en réglant de façon appropriée la pression du gaz à l'intérieur de l'ébauche pour l'aider à se gonfler.

B. 8763   MDT

On peut aussi maintenir une légère pression à l'intérieur de l'ébauche lorsque celle-ci est conformée sous vide dans un calibreur chaud, car ceci favorise l'application de l'ébauche dans le calibreur chaud, puis le calibreur froid, et permet d'éviter son affaissement lors de l'extrusion de la couche compacte rigide de matière thermoplastique formant couche de recouvrement.

Dans le procédé de l'invention, la matière thermoplastique utilisée pour former l'âme expansée peut être identique à la matière thermoplastique utilisée pour former la couche rigide. Cependant, on peut aussi utiliser pour réaliser la couche rigide et l'ébauche, des matières thermoplastiques différentes dans la mesure où celles-ci sont compatibles entre elles.

A titre d'exemple de matières thermoplastiques susceptibles d'être utilisées, on peut citer le chlorure de polyvinyle (PVC), le polystyrène, les copolymères de styrène et d'acrylonitrile, les copolymères de styrène et d'anhydride maléïque, les copolymères acrylonitrile - - butadiène - styrène, et les polyoléfines telles que le polypropylène et le polyéthylène.

Pour la formation de l'ébauche en matière thermoplastique expansée, on utilise des agents d'expansion classiques, par exemple de l'azodicarbonamide.

L'invention concerne également les tubes plastiques allégés rigides fabriqués selon le procédé de la présente invention et qui s'avèrent peu sensibles aux phénomènes de retrait précédemment décrits.

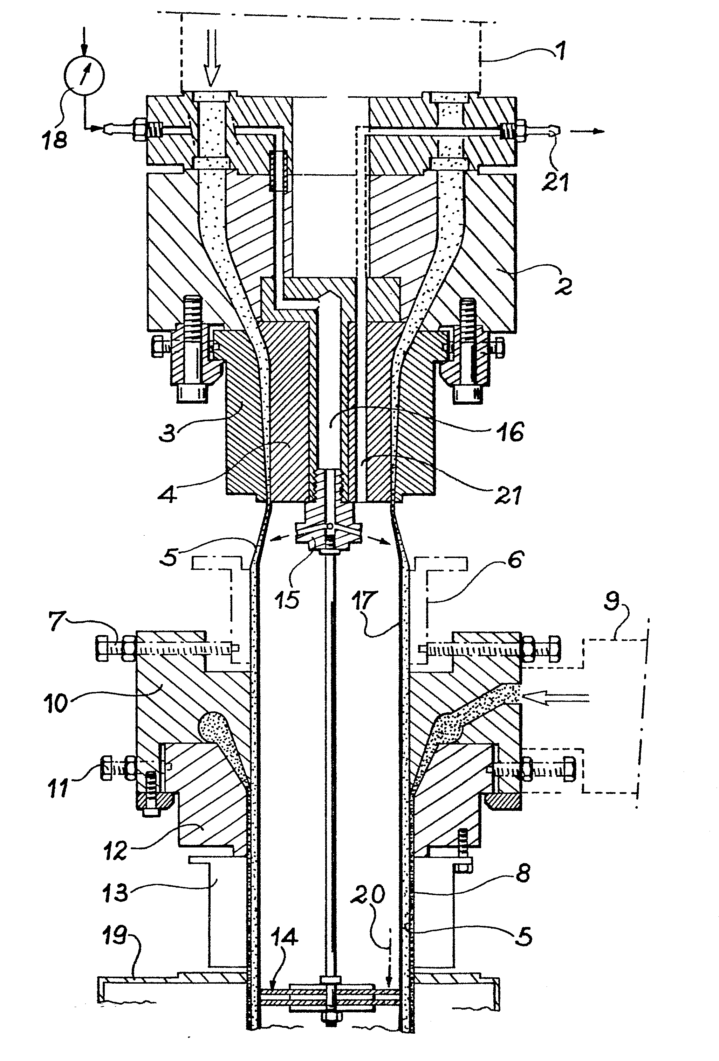

Certains détails de l'invention seront mieux compris à la lecture de la description suivante faite en relation avec la figure unique annexée qui en présente un schéma de principe.

Comme représenté sur le schéma de principe, le procédé de fabrication par extrusions multiples de tubes plastiques allégés, rigides et à paroi composite suivant l'invention met en oeuvre une première extrudeuse (1) constituée par exemple par une extrudeuse du type KMD 90 (non représentée) munie d'une tête classique (2), d'une filière classique (3), d'un poinçon classique (4) et qui permet la fabrication d'une ébauche de tube (ou extrudat) (5) réalisé à partir d'un mélange de PVC rigide tel que le PVCK Wert 67 stabilisé au calcium étain, commercialisé par Limburgse Vinyl Maatschappij, et d'agents d'expansion tels que l'azodicarbonamide. A la sortie de la filière (3) de l'extrudeuse principale, l'ébauche de tube (5) commence son expansion à l'air libre et vient se conformer dans un calibreur (6) sous vide, centré par vis de réglage (7), chauffé et régulé en température pour permettre une adhérence par soudage en continu et à température d'extrusion d'un deuxième extrudat formant couche de recouvrement (8) et provenant de l'extrudeuse secondaire (9) (non représentée) située perpendiculairement à l'axe principal d'extrusion. Cet extrudat (8) est appliqué sur l'extrudat expansé (5) à l'aide d'un anneau filière d'extrusion (10) rattaché à l'extrudeuse secondaire (9). Le centrage de la couche de recouvrement (8) est réglé par action sur des vis de réglage (11) agissant sur la filière de finition (12).

L'épaisseur de la couche de recouvrement enveloppant l'extrudat expansé (5) est déterminée par les côtes de la filière de finition d'extrusion (12).

Le produit composite ainsi obtenu à la sortie de la filière de finition d'extrusion (12) est conformé dans un calibreur froid (13) classique donnant au tube son aspect définitif, puis refroidi dans les bacs classiques appropriés (19). Pour favoriser l'application de l'ébauche expansée (5) issue de la première extrudeuse dans les calibreurs (6 et 13) et éviter son affaissement pendant son enduction par l'extrudat secondaire (8), une légère pression, par exemple de l'ordre de $0,15.10^5$ Pa ($150$ g/cm$^2$), est maintenue à l'intérieur de l'ébauche de tube par un produit gazeux bloqué par un calibre interne (14), distribué par une pomme de répartition (15), et alimenté par une conduite d'amenée (16). Dans le cas où l'on désire la formation, simultanément à l'expansion de l'ébauche, d'une pellicule lisse (17) plus ou moins importante sur la surface interne du tube, le produit gazeux est refroidi plus ou moins fortement et l'on doit prévoir une circulation du fluide gazeux régulée au moyen d'un mano-détendeur (18) afin de maintenir constante la température souhaitée de refroidissement, le fluide étant évacué par la conduite 21.

Selon une variante de mise en oeuvre du procédé de l'invention, on ne conforme pas l'ébauche en matière expansée dans un calibreur chaud avant de la recouvrir de la couche rigide de matière thermoplastique. Dans ce cas, on maintient à l'intérieur de l'ébauche (5) sortant de l'extrudeuse (1), une légère pression de gaz de l'ordre de $0,15.10^5$ Pa ($150$ g/cm$^2$), ce qui permet de conformer sous pression l'ébauche (5) au niveau de l'anneau-filière d'extrusion (10) de la deuxième extrudeuse. L'ajustement du positionnement de l'expansion maximale s'effectue, d'une part, en avançant ou reculant la première extrudeuse et, d'autre part, en réglant la pression de gaz à l'intérieur de l'ébauche pour l'aider à se gonfler. Dans ce cas, on peut remplacer la sortie de gaz (21) par un échappement (20) ménagé dans le calibre intérieur (14), le produit gazeux injecté par la pomme (15) est alors régulé par le mano-détendeur (18), la conduite (16) est raccordée en amont avant pénétration dans le poinçon d'extrusion à une dérivation raccordée à un tube plongeant d'une hauteur plus ou moins importante dans un

liquide afin de permettre le dégagement des surpressions. Cet effet est comparable à celui d'une soupape réglable.

Dans les deux modes de mise en oeuvre du procédé, l'épaisseur des diverses couches est déterminée par les cotes des différents outillages (poinçons et filières), les centrages sont effectués par action sur les vis de réglage (7 et 11) qui agissent sur les filières selon les méthodes habituelles.

Par le procédé de l'invention, on peut réaliser des tubes rigides, allégés, multicouches, ayant un diamètre de 32 à 1000 mm avec une couche externe compacte ayant une épaisseur de 0,5 à 7 mm et une couche interne de matière thermoplastique expansée ayant une épaisseur de 1 à 25 mm.

A titre d'exemple, on a fabriqué des tubes d'assainissement ayant un diamètre externe de 125 mm, une épaisseur totale de 4 mm et une longueur de 6 m, l'épaisseur de la couche compacte étant de 1 mm et l'épaisseur de la couche de matière thermoplastique expansée de 3 mm, dans les conditions suivantes :
- température des différentes zones des deux extrudeuses réglée entre 130° et 210°C,
- vitesse de la vis d'extrusion : 12 tr/min,
- vitesse de la vis du doseur : 18 tr/min,
- couple d'extrusion : 55 %,
- poussée axiale : 4 tonnes,
- pression dans le calibreur (13) : (0,230 atm) $0,23.10^5$ Pa,

L'aspect des tubes était bon et le retrait a été inférieur à 3 %. La densité des tubes était d'environ 1 et leur poids par m de 1,6 kg. Des essais de pression effectués à 20°C sous 1 MPa (10 bars) pendant 1 heure ont donné des résultats satisfaisants.

La présente invention n'est pas limitée aux exemples de réalisation qui viennent d'être décrits, elle est au contraire susceptible de variantes et de modifications qui apparaîtront à l'homme de l'art, comme par exemple de prévoir sur une même ligne d'extrusion plusieurs extrudeuses secondaires fonctionnant suivant le procédé décrit dans l'invention, utilisant des matières thermoplastiques de composition identique ou non, et disposant des couches successives de matière avant le passage dans le calibreur froid.(13).

Il est bien entendu que si l'application préférentielle de l'invention concerne les tubes thermoplastiques, le dispositif peut également être utilisé avec succès et sans faire novation pour la réalisation de profilés creux ou pleins en matière thermoplastique.

## REVENDICATIONS

1. Procédé de fabrication par extrusions multiples d'un tube plastique, allégé, rigide, à paroi composite, caractérisé en ce que :

a) on prépare par extrusion, dans une première extrudeuse (1), une ébauche (5) du tube à partir d'un mélange de matière thermoplastique et d'agent d'expansion,

b) on laisse expanser dans toutes les directions l'ébauche ainsi obtenue,

c) on extrude ensuite directement sur l'ébauche du tube en matière thermoplastique expansée, chauffée et conformée, au moins une couche (8) compacte, rigide de matière thermoplastique formant couche de recouvrement, et

d) on conforme l'ébauche composite ainsi obtenue dans un calibreur froid classique (13).

2. Procédé selon la revendication 1, caractérisé en ce que, après l'étape d'expansion b) de l'ébauche, on conforme sous vide l'ébauche en matière expansée rigide dans un calibreur chaud (6), avant de réaliser l'étape c) d'extrusion de la couche compacte rigide de matière thermoplastique.

3. Procédé selon l'une quelconque des revendications 1 et 2, caractérisé en ce que l'on forme sur la surface interne du tube, une pellicule (17) lisse et dense en soumettant la surface interne de l'ébauche, lors de son expansion, à l'action d'un fluide gazeux froid.

4. Procédé selon l'une quelconque des revendications 1 à 3, caractérisé en ce que la matière thermoplastique de la couche compacte rigide de recouvrement est différente de la matière thermoplastique constituant l'ébauche expansée.

5. Tubes plastiques obtenus par mise en oeuvre du procédé suivant l'une quelconque des revendications 1 à 5.

0163571

1 / 1

Office européen
des brevets

**RAPPORT DE RECHERCHE EUROPEENNE**

**0163571**
Numéro de la demande

EP   85 40 0933

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | US-A-4 322 260  (MONSANTO) <br> * Colonne 2, lignes 45-46; colonne 14, lignes 40-44; figure 4 * | 1 | B 29 C   47/06 <br> B 29 C   67/22 <br> B 29 D   23/00 // <br> B 29 K 105/04 <br> B 29 L   23/22 <br> B 29 L    9/00 |
| Y |  | 2 |  |
| A |  | 4,5 |  |
| Y | US-A-3 876 740  (EGLI AND THOMAS) <br> * Colonne 3, lignes 9-11; colonne 4, ligne 33 * | 2 |  |
| A |  | 5 |  |
| A | EP-A-0 084 360  (SEKISUI KASEIHIN) <br> * Page 15, lignes 14-17; figure 2 * | 1-3,5 | DOMAINES TECHNIQUES RECHERCHES (Int. Cl.4) <br><br> B 29 C <br> B 29 D |
| A | FR-A-2 183 814  (WACKER-CHEMIE) <br> * Page 4, lignes 4-7; figure 1 * | 1,2 |  |
| A | DE-A-2 618 071  (HERMANN BERSTOFF) <br> * Page 5, paragraphe 5; figures * | 1 |  |
|  | ---              -/- |  |  |

Le présent rapport de recherche a été établi pour toutes les revendications

| Lieu de la recherche <br> LA HAYE | Date d'achèvement de la recherche <br> 06-08-1985 | Examinateur <br> ASHLEY G.W. |
|---|---|---|

Office européen
des brevets

**RAPPORT DE RECHERCHE EUROPEENNE**

**0163571**
Numéro de la demande

EP 85 40 0933

| | DOCUMENTS CONSIDERES COMME PERTINENTS | | Page 2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 042 031 (REIFENHÄUSER) <br> * Page 6, paragraphe 6 – page 7, paragraphe 2; figure 1 * | 1 | |
| A,D | FR-A-2 391 058 (BORG-WARNER) | | |
| | | | **DOMAINES TECHNIQUES RECHERCHES (Int. Cl.4)** |

Le présent rapport de recherche a été établi pour toutes les revendications

| Lieu de la recherche <br> LA HAYE | Date d'achèvement de la recherche <br> 06-08-1985 | Examinateur <br> ASHLEY G.W. |
|---|---|---|